# EUROPÄISCHE PATENTSCHRIFT

(11) **EP 3 730 321 B1**
(45) Veröffentlichungstag und Bekanntmachung des Hinweises auf die Patenterteilung: **16.06.2021**
(21) Anmeldenummer: 19170638.1
(22) Anmeldetag: 23.04.2019
(51) Int. Cl.: B60C 23/00

(54) **AGRARFAHRZEUG-REIFENDRUCKSTEUERANLAGE**
AGRICULTURAL VEHICLE TYRE PRESSURE CONTROL SYSTEM
INSTALLATION DE COMMANDE DE LA PRESSION DE PNEU POUR VÉHICULE AGRICOLE

(43) Veröffentlichungstag der Anmeldung: 28.10.2020
(73) Patentinhaber: Schulte, Reinhold, 33106 Paderborn (DE)
(72) Erfinder: Schulte, Reinhold, 33106 Paderborn (DE)
(74) Vertreter: REHBERG HÜPPE + PARTNER

(56) Entgegenhaltungen:
- EP-A1- 1 435 302
- EP-A1- 3 354 488
- EP-A2- 0 365 953
- EP-A2- 2 308 698
- WO-A1-2017/116628
- DE-B3-102012 006 901

## Beschreibung

### TECHNISCHES GEBIET DER ERFINDUNG

Die Erfindung ist bestimmt für einen Einsatz in einem Agrarfahrzeug, bei dem es sich beispielsweise um
- einen Agrar-Zugfahrzeug wie einen Traktor, ein Erntefahrzeug oder ein Güllefahrzeug oder
- einen Agrarfahrzeug-Anhänger
handeln kann. Die Erfindung betrifft eine für ein derartiges Agrarfahrzeug einsetzbare Agrarfahrzeug-Reifendrucksteueranlage, ein Agrarfahrzeug und einen mit dem Agrar-Zugfahrzeug und einem Agrarfahrzeug-Anhänger gebildeten Agrarfahrzeugzug.

An Agrarfahrzeug-Reifendrucksteueranlagen werden insbesondere die folgenden Anforderungen gestellt:
- Eine Agrarfahrzeug-Reifendrucksteueranlage soll einen vorbestimmten Druck in mindestens einem Reifen aufrechterhalten. Dies kann ein Absperren der pneumatischen Verbindung zu dem Reifen durch die Agrarfahrzeug-Reifendrucksteueranlage erfordern. Die Agrarfahrzeug-Reifendrucksteueranlage kann des Weiteren für eine etwaige schleichende Leckage in dem Reifen ein Belüften zum Nachfüllen vornehmen. Bei einer Erwärmung der Luft in dem Reifen kann des Weiteren zum Konstanthalten des Drucks in demselben eine Entlüftung des Reifens durch die Agrarfahrzeug-Reifendrucksteueranlage erforderlich sein. Möglich ist auch, dass abhängig von der Beladung des Agrarfahrzeugs eine beladungsabhängige Druckänderung durch die Agrarfahrzeug-Reifendrucksteueranlage kompensiert werden muss.
- Agrarfahrzeug-Reifendrucksteueranlagen können eingesetzt werden, um durch Modifikation des Drucks in dem Reifen Betriebsbedingungen des Agrarfahrzeugs und insbesondere den Kontaktbedingungen des Reifens mit dem Boden Rechnung tragen. So ist es beispielsweise bekannt, einen Druck in einem Reifen über eine Agrarfahrzeug-Reifendrucksteueranlage zu reduzieren, wenn sich ein unerwünschter Schlupf des Reifens gegenüber dem Boden ergibt. Möglich ist auch, dass bei der Erkennung einer unerwünschten Neigung des Agrarfahrzeugs (da beispielsweise das Agrarfahrzeug auf einem unebenen Boden oder an einem Hang steht) durch Veränderung der Drücke an Reifen einer Achse oder einer Fahrzeugseite der Schrägstellung des Agrarfahrzeugs entgegengewirkt wird. DE 10 2011 085 040 A1 offenbart ein Agrar-Zugfahrzeug mit einer Agrarfahrzeug-Reifendrucksteueranlage, bei der der Reifendruck in Abhängigkeit von einem Schlupf der Reifen auf dem Boden geregelt wird. Alternativ oder zusätzlich kann die Regelung für den Druck des Reifens in Abhängigkeit von der Zugkraft des Agrar-Zugfahrzeugs und/oder der Arbeitstiefe eines Werkzeugs oder Anbaugeräts des Agrar-Zugfahrzeugs erfolgen. Ergänzende, in die Regelung des Drucks des Reifens einfließende Regelungskriterien können die Fahrgeschwindigkeit sein, eine Eingabe des Fahrers, die Reifenart, die Bodenart, die Bodenbeschaffenheit und/oder die Achslastverteilung.
- Bewegt sich das Agrarfahrzeug im öffentlichen Straßenverkehr, bedingen ein niedriger Kraftfahrzeugverbrauch, Vorschriften des Herstellers und gesetzliche Vorgaben und die dynamische Fahrstabilität einen verhältnismäßig hohen Druck in den Reifen. Hingegen kann bei dem Überfahren eines Ackerbodens durch das Agrarfahrzeug ein verringerter Druck in den Reifen gewünscht sein, um die Kontaktfläche des Reifens mit dem Ackerboden zu vergrößern, womit sich verringerte Flächenpressungen für die Anpressung des Reifens an den Ackerboden ergeben, die die Gefahr einer unerwünschten Verdichtung des Ackerbodens zumindest mindert. Bei einem Wechsel des Betriebs des Agrarfahrzeugs von der Fahrt im Straßenverkehr zu der Fahrt über einen Ackerboden (und umgekehrt) muss die Agrarfahrzeug-Reifendrucksteueranlage die erforderlichen Druckänderungen in den Reifen gewährleisten

EP 1 435 302 A1 offenbart eine grundsätzlich geschlossene Fahrzeug-Reifendrucksteueranlage, die befüllt werden kann, indem mittels eines Kompressors Luft aus der Umgebung über einen Filter angesaugt wird. Der Kompressor fördert dabei die Luft einerseits zu einem Vorratsbehälter und andererseits über ein zentrales 3/2-Wegeventil zu einer Zentralleitung. Die Zentralleitung verzweigt über Zweigleitungen zu den Reifen des Nutzfahrzeugs. In den Zweigleitungen ist jeweils ein 3/2-Wege-Achsventil und ein als 2/2-Wege-Sperrventil ausgebildetes Reifenventil dem zugeordneten Reifen vorgeordnet. Hierbei sind die 3/2-Wege-Achsventile am Fahrzeugrahmen befestigt, während die Reifenventile an dem Fahrzeugrad gehalten sind und mit diesem rotieren. Das 3/2-Wege-Achsventil und das Reifenventil sind über über eine Drehdurchführung verlaufende Verbindungsleitung miteinander verbunden, wobei die Druckluft in der Verbindungsleitung sowohl als Versorgungsdruck für das Reifenventil als auch als pneumatischer Steuerdruck des Reifenventils verwendet wird. Ist der Druck in dem Vorratsbehälter größer als der Druck in dem Reifen, kann ohne Betrieb des Kompressors eine Befüllung des Reifens erfolgen. Andernfalls wird die Druckluft aus dem Vorratsbehälter über den Kompressor weiter verdichtet und zur Befüllung mindestens einem Reifen zugeführt. Schließlich ist auch eine Befüllung eines Reifens möglich, indem dem Reifen aus der Umgebung angesaugte und mittels des Kompressors verdichtete Druckluft zugeführt wird. Hingegen kann für eine Entlüftung eines Reifens der Reifen mit einer Saugseite des Kompressors verbunden werden, wobei in diesem Fall die von dem Kompressor aus dem Reifen abgesaugte Druckluft entweder unter Verdichtung durch den Kompressor dem Vorratsbehälter zugeführt werden kann oder in die Atmosphäre entlüftet werden kann. Mit dem Fahrzeugrad rotiert eine reifeninnere Einheit, die neben dem Reifenventil und einer Drossel einen Drucksensor, einen Temperatursensor und eine Sendeeinrichtung aufweist. Mittels der Sendeeinrichtung kann per Funk ein Drucksignal und/oder Temperatursignal an eine Empfangseinrichtung einer elektronischen Steuereinheit übertragen werden, die die Fahrzeug-Reifendrucksteueranlage steuert.

WO 2017/116628 A1 betrifft eine Agrarfahrzeug-Reifendrucksteueranlage, die ein schnelles Be- und Entlüften eines großvolumigen Reifens eines Traktors für einen Wechsel von einer Fahrt über eine Ackerfläche einerseits und einer Fahrt auf einer Straße andererseits (und umgekehrt) ermöglichen soll. Der Traktor verfügt über einen Kompressor, mittels dessen ein Haupt-Vorratsbehälter und mehrere Hilfs-Vorratsbehälter befüllt werden können. Eine Versorgungsleitung der Agrarfahrzeug-Reifendrucksteueranlage kann wahlweise aus dem Haupt-Vorratsbehälter oder den Hilfs-Vorratsbehältern mit Druckluft versorgt werden. Die Versorgungsleitung verzweigt in Zweigleitungen, die jeweils mit einem zugeordneten Reifen verbunden sind. In den Zweigleitungen sind jeweils automatisch betätigbare Belüftungsventile angeordnet und an diese ist jeweils ein Entlüftungsventil angeschlossen, wodurch eine Be- und Entlüftung der Reifen möglich ist. Ein Drucksensor erfasst den Druck in dem Haupt-Vorratsbehälter. Des Weiteren können die Fahrzeugräder jeweils Drucksensoren aufweisen, die den Druck in dem Reifen erfassen. Eine Übertragung des Drucksignals erfolgt drahtlos. Die Be- und Entlüftungsventile sind vor einer Drehdurchführung des Fahrzeugrades angeordnet. Zwischen die Drehdurchführungen und den Innenraum des Reifens sind pneumatisch gesteuerte Belüftungsventile zwischengeordnet, die mit zwei separaten pneumatischen Pfaden der Drehdurchführungen verbunden sind, über die einerseits ein Versorgungsdruck und andererseits ein Steuerdruck an das pneumatisch gesteuerte Belüftungsventil übertragen werden. Das in das Fahrzeugrad integrierte pneumatisch gesteuerte Belüftungsventil ist hierbei als 2/2-Wegeventil oder Sperrventil ausgestaltet, sodass dieses in einer Öffnungsstellung die Belüftung und Entlüftung durch die an dem Fahrzeugrahmen gehaltenen Be- und Entlüftungsventile ermöglicht, während das pneumatisch gesteuerte Belüftungsventil in der Sperrstellung den Innenraum des Reifens absperrt. Das in der Zweigleitung angeordnete Belüftungsventil und das Entlüftungsventil können als Magnetventile ausgebildet sein. Anstelle separat ausgebildeter Be- und Entlüftungsventile kann auch ein 3/3-Wegeventil eingesetzt sein, welches eine Sperrstellung, eine Belüftungsstellung und eine Entlüftungsstellung aufweist. Der pneumatische Steuerkreis zur Ansteuerung der in das Fahrzeugrad integrierten Sperrventile ist in WO 2017/116628 A1 weder weiter beschrieben noch dargestellt. Ein Befüllen mindestens eines Reifens erfolgt gemäß WO 2017/116628 A1, indem zunächst ein schnelles Befüllen ermöglicht wird, indem der mindestens eine Reifen mit dem Haupt-Vorratsbehälter und den Hilfsvorratsbehältern verbunden wird. Ist ein Druckausgleich erfolgt, kann eine weitere Druckerhöhung in dem Reifen erfolgen, indem die Hilfs-Vorratsbehälter gegenüber dem Kompressor abgesperrt werden und durch Betrieb des Kompressors über den Haupt-Vorratsbehälter der Druck in dem mindestens einen Reifen erhöht wird. Eine Entlüftung der Reifen erfolgt durch die Entlüftungsventile unmittelbar in die Umgebung. Neben der Steuerung der Ventile über eine elektronische Steuereinrichtung kann auch eine manuelle Steuerung durch den Benutzer erfolgen.

EP 0 365 953 A2 betrifft eine Reifendrucksteueranlage für eine geländegängiges Fahrzeug, bei welchem ebenfalls eine schnelle Veränderung des Drucks in einem Reifen für einen Wechsel zwischen der Fahrt auf der Straße und der Fahrt in tiefem Gelände ermöglicht werden soll. In der Reifendrucksteueranlage wird der Druck eines Vorratsbehälters über ein Relaisventil, welches über Feinregelventile und 3/2-Magnetventile angesteuert wird, umgewandelt in einen Druck in einer ausgangsseitigen Versorgungsleitung, der entweder dem Reifendruck für den Betrieb auf einer Straße oder dem Reifendruck für einen Betrieb in tiefem Gelände entspricht. Die Versorgungsleitung ist über einen Eingang eines Wechselventils, ein Radabsperrventil in Ausgestaltung als Be- und Entlüftungsventil, eine Drehdurchführung und ein Schnelllöseventil und ein nachgeschaltetes Radsteuerventil in Ausgestaltung als pneumatisch gesteuertes Sperrventil mit einem Reifen verbunden. Das Schnelllöseventil und das Radsteuerventil rotieren mit dem Fahrzeugrad. Das Radsteuerventil kann einerseits über einen Druckimpuls auf der Versorgungsleitung geöffnet werden und andererseits über einen Schließdruck in einer Steuerleitung zu jedem beliebigen Zeitpunkt und bei jeder beliebigen Druckhöhe geschlossen werden. Der Druck in der Steuerleitung wird dabei mittels eines elektronisch gesteuerten Schließdruckventils vorgegeben. Das Schließdruckventil kann vom Fahrzeugführer und einer elektronische Steuereinrichtung elektrisch betätigt werden. Die Steuerleitung verläuft ebenfalls über die Drehdurchführung. Um zu vermeiden, dass bei der Reifendrucksteueranlage der Druck in dem Reifen den Sollwert nicht oder nur sehr schleichend erreicht (beispielsweise weil der zu befüllende Reifen einen Defekt hat oder weil die Kompressorleistung nicht ausreicht), ein Schließdruck-Signal des Schließdruckventils sehr spät erzeugt würde oder ganz ausbleiben würde mit der Folge, dass an der Drehdurchführung ständig ein Druck anstehen würde und die Dichtungen der Drehdurchführung schnell verschleißen, schlägt EP 0 365 953 A2 vor, dem Relaisventil einen Doppeldruckschalter nachzuordnen, dessen beide Schaltpunkte um eine ausreichende Sicherheitsmarge unter den Sollwerten des Drucks für die Fahrt auf der Straße und in tiefem Gelände liegen. Sind die Druckwerte des Doppeldruckschalters erreicht, wird eine Zeitverzögerung aktiviert, nach deren Ablauf das Schließdruckventil zwangsweise betätigt wird, was die Schließung des Radsteuerventils zur Folge hat und damit auch die Entlüftung der Versorgungsleitung und die Entlastung der Drehdurchführung.

EP 3 354 488 A1 offenbart eine Reifendrucksteueranlage für ein Offroad-Fahrzeug, bei der den Reifen vorgeordnete und mit den Fahrzeugrädern rotierende Sperrventile über eine Drehdurchführung sowohl mit einem Versorgungsdruck als auch mit einem pneumatischen Steuerdruck beaufschlagt werden. Hierbei wird der Steuerdruck durch ein zentrales Magnetventil für sämtliche Reifen vorgegeben, während über unabhängige Magnetventile der Versorgungsdruck für einer Achse zugeordnete Reifen individuell vorgegeben werden kann. Alternativ schlägt EP 3 354 488 A1 vor, als mit den Fahrzeugrädern rotierende Sperrventile elektronisch gesteuerte 2/2-Wegeventile einzusetzen, wobei in diesem Fall über die Drehdurchführung einerseits der Versorgungsdruck und andererseits ein elektrisches Steuersignal übertragen werden.

Weiterer Stand der Technik ist aus DE 10 2012 006 901 B3 und EP 2 308 698 A2 bekannt.

### AUFGABE DER ERFINDUNG

Der vorliegenden Erfindung liegt die Aufgabe zugrunde, eine Agrarfahrzeug-Reifendrucksteueranlage, ein Agrarfahrzeug mit einer derartigen Agrarfahrzeug-Reifendrucksteueranlage sowie einen Agrarfahrzeugzug vorzuschlagen, welche, welches oder welcher eine verbesserte Steuerungscharakteristik für die Steuerung der Druckbeaufschlagung mindestens eines Reifens eines Agrarfahrzeugs aufweist.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung betrifft eine Agrarfahrzeug-Reifendrucksteueranlage. Die Agrarfahrzeug-Reifendrucksteueranlage verfügt über eine Druckluftversorgungseinrichtung, die fahrzeugseitig (also nicht an einem Fahrzeugrad, sondern beispielsweise an einem Fahrzeugträger oder Fahrzeugaufbau) angeordnet ist.

Des Weiteren verfügt die Agrarfahrzeug-Reifendrucksteueranlage über eine Reifendrucksteuereinrichtung. Mittels der Reifendrucksteuereinrichtung kann eine Belüftung und Entlüftung des Reifens erfolgen. Im Rahmen der Erfindung umfasst eine "Steuerung" auch eine "Regelung" mit einem geschlossenen Regelkreis. Die Agrarfahrzeug-Reifendrucksteueranlage verfügt auch über eine Drehdurchführung, über die die Druckluftversorgungseinrichtung pneumatisch mit dem Reifen verbunden ist.

Die Erfindung basiert insbesondere auf der Erkenntnis, dass für die eingangs angeführten beispielhaften Anforderungen an eine Agrarfahrzeug-Reifendrucksteueranlage eine entscheidende Steuerungscharakteristik ist, wie schnell eine Belüftung oder Entlüftung des Reifens erfolgen kann. Insbesondere für eine Ermöglichung einer schnelleren Belüftung und/oder Entlüftung des Reifens schlägt die Erfindung die folgenden Maßnahmen vor:
Erfindungsgemäß wird der Tatsache Rechnung getragen, dass eine Beeinflussung der Schnelligkeit einer Be- und Entlüftung des Reifens (neben der Abhängigkeit von dem wirksamen Druckgefälle gemäß a)) abhängig ist von der für die Be- und Entlüftung wirksamen Leitungslänge, da die Drosselwirkung bei der Be- und Entlüftung des Reifens von der Länge dieser Leitung abhängig ist.

Erfindungsgemäß wird daher eine Reduzierung der be- und entlüftenden Leitungslänge zwischen dem Reifen und der Drucksteuereinrichtung vorgeschlagen, indem die Drucksteuereinrichtung nicht wie bei herkömmlichen Agrarfahrzeugen fahrzeugseitig angeordnet ist, sondern vielmehr an dem im Fahrbetrieb rotierenden Fahrzeuggrad angeordnet und befestigt ist. Somit ist erfindungsgemäß für die Be- und Entlüftung des Reifens durch die Reifendrucksteuereinrichtung lediglich die kurze Leitungslänge zwischen der an dem Fahrzeugrad, insbesondere der Felge des Fahrzeugrads, gehaltenen Reifendrucksteuereinrichtung und dem Einlass in den Reifen relevant.

Hinzu kommt unter Umständen, dass für aus dem Stand der Technik bekannte Ausführungsformen mit fahrzeugseitig angeordneter Reifendrucksteuereinrichtung weitere drosselnde und damit die Geschwindigkeit der Be- und Entlüftung reduzierende pneumatische Bauelemente in den Entlüftungspfad integriert waren. So musste beispielsweise für die herkömmliche Be- und Entlüftung der be- und entlüftende Druckluftstrom über die Drehdurchführung geführt werden, im Bereich welcher u. U. eine Drosselung erfolgt ist.

Optional verwendet die Agrarfahrzeug-Reifendrucksteueranlage darüber hinaus nicht einen herkömmlichen Druckluftpfad mit einem Druckniveau, welches von der herkömmlichen Druckluft-Bereitstellungsanlage des Agrarfahrzeugs bereitgestellt wird. Eine derartige herkömmliche Druckluft-Bereitstellungsanlage stellt dabei Druckluft mit einem verhältnismäßig niedrigen Druckniveau bereit, indem aus der Umgebungsluft mittels eines Kompressors Druckluft erzeugt wird, die Druckluft einem dem Kompressor nachgeordneten Lufttrockner zugeführt wird und dann die Druckluft über Kreisschutzventile, Druckbegrenzungsventile, Sicherheitsventile u. ä. Verbraucherkreisen des Agrarfahrzeugs zugeführt wird, wobei auch ein Druckregler und Ventile zur Gewährleistung eines Regenerationsbetriebs des Lufttrockners vorhanden sein können und die Verbraucherkreise unterschiedliche Druckniveaus aufweisen können (im Folgenden "Druckluft-Bereitstellungsanlage").

Für die genannte Option findet eine fahrzeugseitige Druckluftversorgungseinrichtung Einsatz, die einen Niederdruckpfad aufweist, in welchem beispielsweise das Druckniveau durch die Druckluft-Bereitstellungsanlage vorliegen kann. Darüber hinaus ist ein Hochdruckpfad vorgesehen. Zwischen dem Niederdruckpfad und dem Hochdruckpfad ist eine Druckerhöhungseinrichtung angeordnet. Bei dieser Druckerhöhungseinrichtung kann es sich beispielsweise um eine Pumpe oder einen Druckbooster (der auch als Druckübersetzer bezeichnet wird) handeln. Die Reifendrucksteuereinrichtung ist an den Hochdruckpfad angeschlossen. Eine Geschwindigkeit einer Belüftung eines Reifens hängt ab von dem Druckgefälle zwischen einer Druckquelle und dem Reifen - je höher das Druckgefälle, desto schneller kann die Belüftung des Reifens erfolgen. Da gemäß dem erfindungsgemäßen Vorschlag die Reifendrucksteuereinrichtung (und der nachgeordnete Reifen) nicht an den Niederdruckpfad angeschlossen ist, sondern an den Hochdruckpfad angeschlossen ist, ergibt sich eine schnellere Belüftung des Reifens. Durch die Dimensionierung der Druckerhöhungseinrichtung kann die Höhe des die Reifendrucksteuereinrichtung und den Reifen versorgenden Drucks konstruktiv vorgegeben werden, womit auch bei kleinem bereitgestellten Druckniveau der Druckluft-Bereitstellungsanlage ein hohes Druckgefälle herbeigeführt werden kann.

Vorzugsweise findet sowohl die Verkürzung der Leitungslänge durch Anordnung der Reifendrucksteuereinrichtung an dem im Fahrbetrieb rotierenden Fahrzeuggrad als auch ein Anschluss der Reifendrucksteuereinrichtung an den Hochdruckpfad kumulativ Einsatz.

Die Vorteile einer erfindungsgemäß ermöglichten schnelleren Be- und Entlüftung des Reifens sollen anhand der folgenden (nicht beschränkenden) Beispiele erläutert werden:
- Für einen Wechsel des Agrarfahrzeugs von einem Straßenbetrieb zu einer Fahrt über einen Ackerboden ist eine Druckreduzierung erforderlich, so dass der Fahrer mit dem Erreichen des Ackerbodens zunächst warten muss, bis eine hinreichende Reduzierung erfolgt ist. Durch die erfindungsgemäße Ausgestaltung kann die erforderliche Wartezeit reduziert werden. Das Entsprechende gilt für den Wechsel von einer Fahrt des Agrarfahrzeugs über einen Ackerboden zu der Fahrt des Agrarfahrzeugs im Straßenverkehr.
- Mit einer schnelleren Be- und/oder Entlüftung des Reifens kann mit einer höheren Dynamik auf veränderte Betriebsbedingungen reagiert werden. Beladungsabhängigen Druckänderungen kann schneller entgegengewirkt werden. Eine Veränderung des Drucks in Abhängigkeit des Schlupfs, der Zugkraft, der Arbeitstiefe eines Werkzeugs oder Anbaugeräts, der Bodenart, der Bodenbeschaffenheit, der Geschwindigkeit oder der Achslastverteilung kann schneller erfolgen. Auch ein Ausgleich einer Neigung des Fahrzeugs auf einem unebenen Untergrund wie einem Hang kann schneller erfolgen. Denkbar ist sogar, dass in einem Fahrbetrieb im Straßenverkehr dynamischen Wank-, Gier- und/oder Nickbewegungen durch schnelle Druckänderungen in dem Reifen entgegengewirkt werden kann.

Erfindungsgemäß weist die Drehdurchführung eine Versorgungs-Drehdurchführung auf, über welche die Druckluft in dem Versorgungsstrang, insbesondere dem Hochdruckpfad, von dem Agrarfahrzeug an das Fahrzeugrad übertragen wird. In diesem Fall weist die Reifendrucksteuereinrichtung ein Ventil auf, welches als 3/2-Wegeventil ausgebildet ist. Das Ventil verfügt dabei kumulativ über die folgenden Anschlüsse:
- Das Ventil der Reifendrucksteuereinrichtung weist einen Versorgungsanschluss auf, der mit der Versorgungs-Drehdurchführung verbunden ist.
- Das Ventil der Reifendrucksteuereinrichtung weist einen Entlüftungsanschluss auf, über welchen der Reifen entlüftet werden kann.
- Die Reifendrucksteuereinrichtung weist einen Reifenanschluss auf, der (unmittelbar oder unter Zwischenschaltung weiterer pneumatischer Bauelemente) mit dem Reifen verbunden ist.
- Das Ventil weist einen pneumatischen Steueranschluss auf, der mit der Steuerdruck-Drehdurchführung verbunden ist.

Erfindungsgemäß ist zwischen dem Versorgungsanschluss und der Versorgungs-Drehdurchführung ein Rückschlagventil angeordnet, welches in Richtung des Versorgungsanschlusses des Ventils öffnet und somit in Richtung der Versorgungs-Drehdurchführung schließt. Dieser Ausgestaltung liegt zugrunde, dass ohne Einsatz des Rückschlagventils oder möglichen Einsatzes eines anderen sperrenden Ventils (und in dem erfindungsgemäßen Fall, dass das Ventil der Reifendrucksteuereinrichtung ein 3/2-Wegeventil mit einer Belüftungsstellung und einer Entlüftungsstellung ohne eine Sperrstellung ist) der Versorgungsdruck, insbesondere in dem Hochdruckpfad, permanent an der Versorgungs-Drehdurchführung ansteht. Dies erhöht das Risiko eines etwaigen schleichenden Druckverlusts im Bereich der Versorgungs-Drehdurchführung und führt infolge der in der Versorgungs-Drehdurchführung auf die Dichtungen wirkenden Kräfte zu einem erhöhten Verschleiß. Durch den vorgeschlagenen Einsatz des Rückschlagventils kann in Betriebssituationen, in welchen das Ventil der Reifendrucksteuereinrichtung grundsätzlich die Belüftungsstellung einnimmt, aber keine Belüftung des Reifens erforderlich ist, mittels der fahrzeugseitigen Druckluftversorgungseinrichtung der an der Versorgungs-Drehdurchführung wirkende Druck reduziert werden, während der Druck in dem Reifen über das Rückschlagventil gesichert ist.

Ein weiterer Vorschlag der Erfindung schlägt vor, dass bei etwaigem Einsatz einer Druckerhöhungseinrichtung der Druckerhöhungseinrichtung (beispielsweise der Pumpe oder dem Druckbooster) eine Bypassleitung parallelgeschaltet ist. Die Bypassleitung ermöglicht eine Druckversorgung des Hochdruckpfads aus dem Niederdruckpfad unter Umgehung der Druckerhöhungseinrichtung (während eine entgegengesetzte Druckluftströmung vorzugsweise unterbunden ist). Diese Ausgestaltung trägt der Tatsache Rechnung, dass die Druckerhöhungseinrichtung versagen kann, womit keine Versorgung des Hochdruckpfads mehr mit Druckluft auf dem Hochdruckniveau möglich ist. In diesem Fall kann über die Bypassleitung Druckluft aus der Druckluft-Bereitstellungsanlage von dem Niederdruckpfad zu dem Hochdruckpfad strömen. Auch wenn dann in dem Hochdruckpfad tatsächlich nicht mehr das durch die Druckerhöhungseinrichtung bereitgestellte höhere Druckniveau vorhanden ist, ist dennoch ein weiterer Betrieb der Agrarfahrzeug-Reifendrucksteueranlage möglich, für welchen dann allerdings die Geschwindigkeit einer möglichen Be- oder Entlüftung wieder der Geschwindigkeit für die Ausgestaltung gemäß dem Stand der Technik entspricht. Vorzugsweise ist in der Bypassleitung ein Rückschlagventil angeordnet, welches in Richtung von dem Hochdruckpfad zu dem Niederdruckpfad sperrt. Hierbei kann das Rückschlagventil (je nach konstruktiver Ausgestaltung und/oder Auslegung einer Schließfeder) ohne einen Schwellwert für den Öffnungsdruck oder mit einem Schwellwert für den Öffnungsdruck ausgestattet sein.

Für eine weitere Ausgestaltung der Agrarfahrzeug-Reifendrucksteueranlage ist in dem Hochdruckpfad ein Druckbehälter angeordnet. In dem Druckbehälter kann somit Druckluft mit dem hohen Druck des Hochdruckpfads gespeichert werden, so dass bezogen auf das Volumen des Druckbehälters eine verhältnismäßig große Menge an Druckluft gespeichert werden kann. Benötigt die Druckerhöhungseinrichtung eine gewisse Zeitspanne, um ein gewisses Druckluftvolumen auf den gewünschten Druck in dem Hochdruckpfad zu verdichten, kann eine Befüllung des Druckbehälters während dieser Zeitspanne erfolgen. Das verhältnismäßig große Volumen der Druckluft unter dem erhöhten Druck kann dann genutzt werden für eine Belüftung des Reifens, so dass auch für länger anhaltende Belüftungsvorgänge ein größerer Druckluft-Volumenstrom bereitgestellt werden kann als dies infolge der Förderleistung der Druckerhöhungseinrichtung selbst möglich wäre.

Möglich ist auch, dass (alternativ oder zusätzlich) ein Druckbehälter in dem Niederdruckpfad angeordnet ist. In dem Verbraucherkreis kann mittels des Druckbehälters dann eine Speicherung der Druckluft erfolgen, welche Entnahmespitzen der Druckluft durch den Betrieb der Druckerhöhungseinrichtung abfedern kann und auch eine gezielte Deaktivierung des Kompressors in der Druckluft-Bereitstellungsanlage während einer Leerlaufphase Rechnung tragen kann.

Für die in der Agrarfahrzeug-Reifendrucksteueranlage eingesetzte Drehdurchführung können grundsätzlich aus dem Stand der Technik bekannte Drehdurchführungen Einsatz finden. Erfindungsgemäß weist die Drehdurchführung eine Steuerdruck-Drehdurchführung auf. Über die Steuerdruck-Drehdurchführung kann zwischen dem Agrarfahrzeug und dem Fahrzeugrad ein pneumatischer Steuerdruck übertragen werden. Dieser pneumatische Steuerdruck kann dann in dem Fahrzeugrad genutzt werden, um die Reifendrucksteuereinrichtung des Fahrzeugrads zu steuern. Möglich ist hierdurch, dass keine Übertragung eines elektrischen Signals (insbesondere eines elektrischen Steuersignals für die Reifendrucksteuereinrichtung) zwischen dem Agrarfahrzeug und dem Fahrzeugrad erfolgen muss.

Für einen weiteren Vorschlag der Erfindung ist der Versorgungs-Drehdurchführung eine Versorgungs-Ventileinrichtung vorgeordnet. Über die Versorgungs-Ventileinrichtung kann die Versorgungs-Drehdurchführung belüftet werden, womit dann insbesondere an dem Ventil der Reifendrucksteuereinrichtung der Versorgungsdruck bereitgestellt wird. Andererseits kann insbesondere in Betriebssituationen, in welchen keine Belüftung des Reifens gewünscht ist, mittels der Versorgungs-Ventileinrichtung eine Entlüftung der Versorgungs-Drehdurchführung erfolgen, womit die zuvor genannten Vorteile eines verringerten Verschleißes und der Verringerung des Risikos einer schleichenden Undichtigkeit erzielt werden können.

Alternativ oder zusätzlich kann der Steuerdruck-Drehdurchführung eine Steuerdruck-Ventileinrichtung vorgeordnet sein. Über diese Steuerdruck-Ventileinrichtung kann eine Be- und Entlüftung der Steuerdruck-Drehdurchführung erfolgen, womit letzten Endes dann über die Steuerdruck-Ventileinrichtung die pneumatische Ansteuerung des Ventils der Reifendrucksteuereinrichtung möglich ist.

Durchaus möglich ist, dass die Steuerdruck-Ventileinrichtung einerseits und die Versorgungs-Ventileinrichtung andererseits in separaten Baueinheiten angeordnet sind, die dann auch verteilt über das Fahrzeug angeordnet sein können mit dazwischen angeordneten Leitungsverbindungen. Für eine erfindungsgemäße Agrarfahrzeug-Reifendrucksteueranlage sind aber die Steuerdruck-Ventileinrichtung und die Versorgungs-Ventileinrichtung in einer Baueinheit angeordnet, was die Bevorratung vereinfacht, die Montage vereinfacht und/oder den Bauraum an dem Fahrzeug und die erforderlichen Leitungsverbindungen reduziert.

Durchaus möglich ist, dass die Drehdurchführung neben der Übertragung pneumatischer Signale auch elektrische Signale überträgt, beispielsweise über einen Schleifkontakt. Bei den elektrischen Signalen kann es sich beispielsweise um ein elektrisches Steuersignal für ein elektrisch gesteuertes Ventil der Reifendrucksteuereinrichtung handeln. Ebenfalls möglich ist, dass in umgekehrter Richtung über die elektrische Drehdurchführung ein Messsignal eines Sensors von dem Fahrzeugrad an das Fahrzeug übertragen wird. Um lediglich ein die Erfindung nicht beschränkendes Beispiel zu nennen, kann es sich bei dem Messsignal um das Signal eines Drucksensors handeln, der den Druck in dem Reifen erfasst. Entsprechend kann auch das Messsignal eines Temperatursensors übertragen werden. Für einen Vorschlag der Erfindung ist ein Drucksensor vorhanden, der beispielsweise an der Felge oder dem Felgenbett montiert sein kann. Der Drucksensor erfasst ein Messsignal für den Druck in dem Reifen. In diesem Fall kann eine drahtlose Übertragungseinrichtung vorhanden sein, über welche drahtlos das Messsignal für den Druck an eine elektronische Steuereinheit übertragen werden kann. Diese elektronische Steuereinheit kann beispielsweise für eine elektronische Regelung des Drucks in dem Reifen auf Grundlage des Messsignals für den Druck in dem Reifen zuständig sein. In diesem Fall erzeugt die elektronische Steuereinheit ein elektronisches Steuersignal für die Versorgungs-Ventileinrichtung, die Steuerdruck-Ventileinrichtung und mindestens ein elektronisch gesteuertes Ventil der Reifendrucksteuereinrichtung. Möglich ist auch, dass die elektronische Steuereinheit mit einer Bedieneinrichtung für den Fahrer und/oder einem Display für den Fahrer zusammenarbeitet, wobei an dem Display der Druck in dem Reifen angezeigt werden kann und/oder in der Bedieneinheit durch den Fahrer eine gewünschte Druckänderung vorgegeben werden kann oder ein mit einem Druck in dem Reifen korrelierender Betriebszustand des Agrarfahrzeugs vorgegeben werden kann.

Eine weitere Lösung der der Erfindung zugrunde liegenden Aufgabe stellt ein Agrarfahrzeug (also ein Agrar-Zugfahrzeug oder ein Agrar-Anhänger) dar, welches eine Agrarfahrzeug-Reifendrucksteueranlage aufweist, wie diese zuvor beschrieben worden ist.

Möglich ist des Weiteren, dass in einem derartigen Agrarfahrzeug der Hochdruckpfad zu mehreren Hochdruckpfadzweigen verzweigt. Die Hochdruckpfadzweige führen jeweils zu einem Reifen. In den Hochdruckpfadzweigen ist dann jeweils eine Reifendrucksteuereinrichtung, die an einer Felge eines Fahrzeugrads befestigt ist, und eine zugeordnete Drehdurchführung angeordnet. Für diese Ausgestaltung ist dann die Druckerhöhungseinrichtung nicht nur für die Bereitstellung von Druckluft mit einem erhöhten Druck für einen einzigen Reifen zuständig, sondern für mehrere Reifen, wobei im Extremfall über eine einzige Druckerhöhungseinrichtung und den Hochdruckpfad sämtliche Reifen des Agrarfahrzeugs mit Druckluft versorgt werden.

Eine weitere Lösung der der Erfindung zugrunde liegenden Aufgabe stellt ein Agrarfahrzeugzug dar. Dieser Agrarfahrzeugzug verfügt über ein Agrar-Zugfahrzeug und einen damit (mechanisch, elektrisch und/oder pneumatisch) gekoppelten Agrarfahrzeug-Anhänger. In dem Agrarfahrzeug-Anhänger sind dann ebenfalls mehrere Hochdruckpfadzweige vorhanden, die jeweils zu einem Reifen führen. In den Hochdruckpfadzweigen ist dann jeweils eine an einer Felge befestigte Reifendrucksteuereinrichtung und eine Drehdurchführung angeordnet. Hierbei können die Hochdruckpfadzweige von einem Hochdruckpfad abzweigen, der über einen pneumatischen (Hochdruckpfad-)Kupplungskopf zwischen dem Agrar-Zugfahrzeug und dem Agrarfahrzeug-Anhänger von dem Agrar-Zugfahrzeug mit Druckluft auf dem Hochdruckniveau versorgt wird. Hierbei kann die Versorgung mit der Druckluft auf dem Hochdruckniveau durch die Druckerhöhungseinrichtung des Agrar-Zugfahrzeugs erfolgen. Vorzugsweise stellt aber die Versorgung über den Kupplungskopf zwischen Agrar-Zugfahrzeug und Agrarfahrzeug-Anhänger einen Verbraucherkreis auf einem Niederdruckniveau dar, wie dieses beispielsweise über die Druckluft-Bereitstellungsanlage bereitgestellt wird, wobei dann der Agrarfahrzeug-Anhänger einen Verbraucherkreis bilden kann. In diesem Fall kann auf dem Agrarfahrzeug-Anhänger eine Druckerhöhungseinrichtung angeordnet sein, welche einen Hochdruckpfad mit Druckluft mit dem erhöhten Druckniveau zur Verfügung stellt, der dann in die einzelnen Hochdruckpfadzweige verzweigt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt stark schematisiert ein Agrar-Zugfahrzeug mit einer Agrarfahrzeug-Reifendrucksteueranlage.
- **Fig. 2**: zeigt ein Fahrzeugrad mit einem Reifen, dessen Druckbeaufschlagung über eine Reifendrucksteuereinrichtung, eine Steuerdruck-Drehdurchführung, eine Versorgungs-Drehdurchführung, eine Versorgungs-Ventileinrichtung sowie eine Steuerdruck-Ventileinrichtung einer Agrarfahrzeug-Reifendrucksteueranlage gemäß Fig. 1 gesteuert wird.
- **Fig. 3**: zeigt eine mit einem Druckbooster gebildete Druckerhöhungseinrichtung, die zwischen einen Niederdruckpfad und einen Hochdruckpfad einer Agrarfahrzeug-Reifendrucksteueranlage gemäß Fig. 1 zwischengeschaltet ist.
- **Fig. 4**: zeigt eine mit einer Pumpe und einem Bypass gebildete Druckerhöhungseinrichtung einer Agrarfahrzeug-Reifendrucksteueranlage gemäß Fig. 1.
- **Fig. 5**: zeigt schematisch einen Agrarfahrzeug-Anhänger eines Agrarfahrzeugzugs, der mit einer Agrarfahrzeug-Reifendrucksteueranlage ausgestattet ist.

### FIGURENBESCHREIBUNG

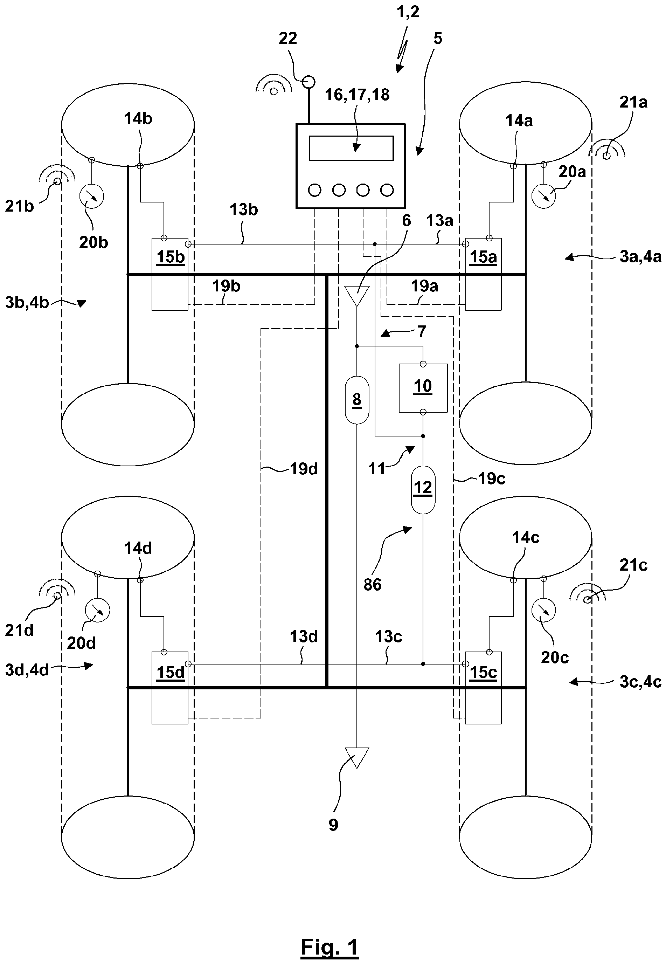

**Fig. 1** zeigt ein Agrarfahrzeug 1, welches hier als Agrar-Zugfahrzeug 2 ausgebildet ist. Das Agrar-Zugfahrzeug 2 ist als zweiachsiges Fahrzeug ausgebildet mit Fahrzeugrädern 3a, 3b einer ersten Achse und Fahrzeugrädern 3c, 3d einer zweiten Achse, die jeweils einen Reifen 4a, 4b, 4c, 4d aufweisen. Die Darstellung des zweiachsigen Agrar-Zugfahrzeugs 2 ist aber lediglich beispielhaft gewählt, sodass das erfindungsgemäße Konzept Einsatz finden kann für beliebige Achskonzepte und Achszahlen.

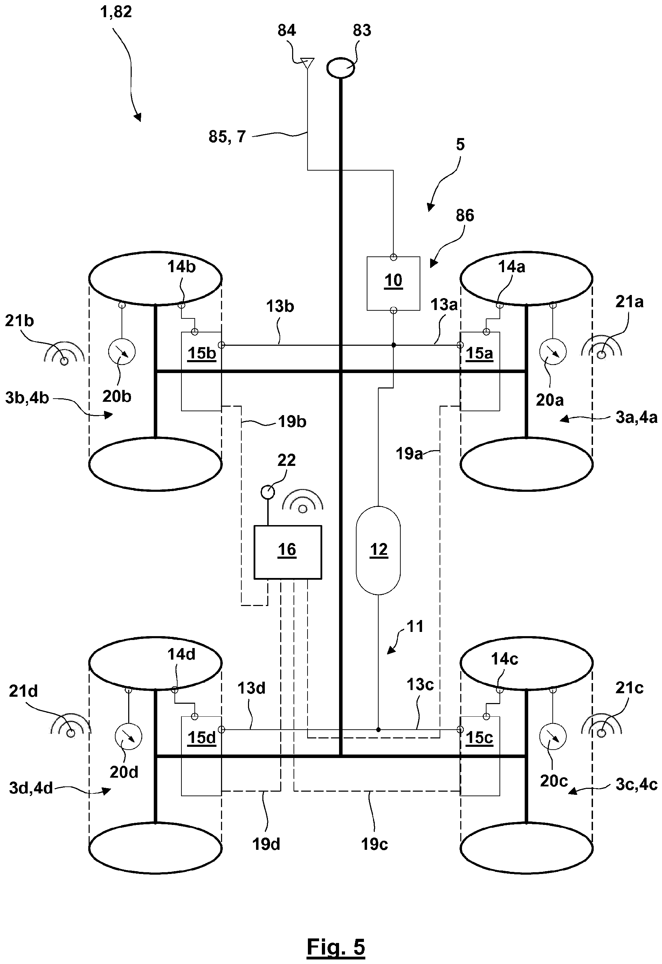

Die Beaufschlagung der Reifen 4 mit Druckluft und insbesondere ein Belüften oder Entlüften sowie ein Absperren derselben wird gesteuert (worunter auch ein Regeln verstanden wird) durch eine Agrarfahrzeug-Reifendrucksteueranlage 5. Die Agrarfahrzeug-Reifendrucksteueranlage 5 weist einen Eingangsanschluss 6 auf, welcher auf übliche Weise von der Druckluft-Bereitstellungsanlage des Agrar-Zugfahrzeugs 2 mit Druckluft versorgt wird. Vorzugsweise ist der Eingang 6 einem von mehreren Verbraucherkreisen der Druckluft-Bereitstellungsanlage des Agrar-Zugfahrzeugs 2 zugeordnet. Stromabwärts des Eingangs 6 bildet die Agrarfahrzeug-Reifendrucksteueranlage einen Niederdruckpfad 7. Das Druckniveau in dem Niederdruckpfad 7 wird durch die stromaufwärts angeordneten genannten Bauelemente der Druckluft-Bereitstellungsanlage (Kompressor, Druckregler, Lufttrockner, Mehrkreisschutzventile, weitere Ventile) vorgegeben. Das Druckniveau in dem Niederdruckpfad 7 kann beispielsweise höchsten 1,5 bar, 2 bar, 5 bar, 10 bar oder 12 bar betragen. Der Niederdruckpfad 7 weist einen Druckbehälter 8 auf. Möglich ist, dass an den Druckbehälter 8 auch ein Anschluss oder Kupplungskopf 9 angeschlossen ist, über den eine Versorgung eines Agrarfahrzeug-Anhängers 82 (s. Fig. 5) oder eines Anbaugeräts oder Werkzeugs des Agrar-Zugfahrzeug 2 mit Druckluft auf dem Niederdruckniveau versorgt wird.

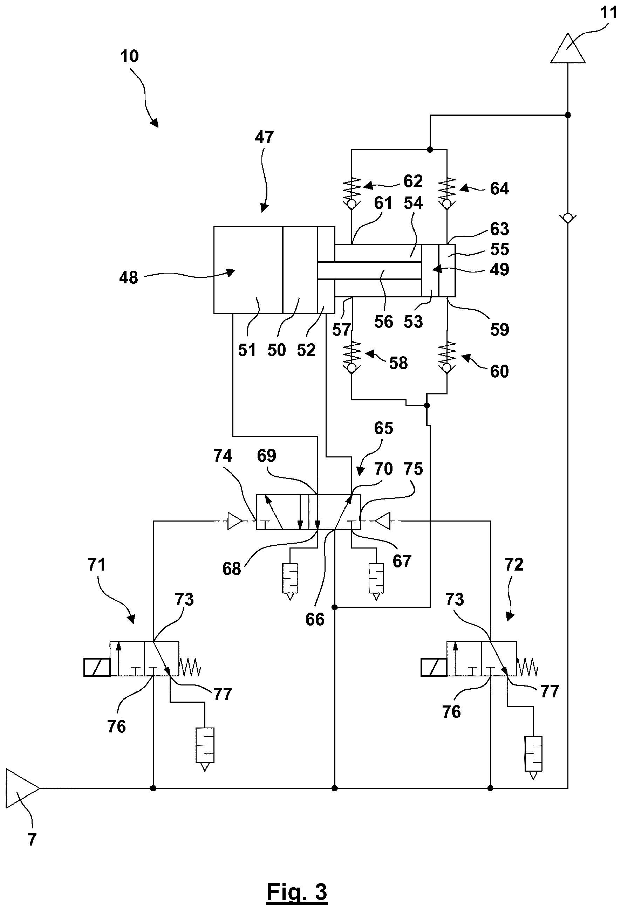

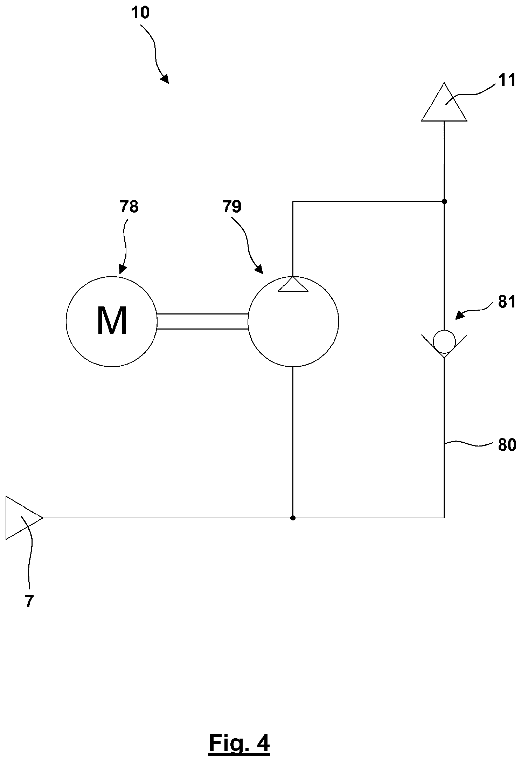

Der Niederdruckpfad 7 ist über eine Druckerhöhungseinrichtung 10, von dem zwei mögliche Ausgestaltungen in den Fig. 3 und 4 dargestellt sind, mit einem Hochdruckpfad 11 verbunden. Die Druckerhöhungseinrichtung 10 führt dem Niederdruckpfad 7 entnommene Druckluft unter Erhöhung des Drucks von dem Niederdruckniveau auf ein Hochdruckniveau dem Hochdruckpfad 11 zu. In dem Hochdruckpfad 11 ist das Hochdruckniveau infolge der Druckerhöhungseinrichtung 10 mindestens um den Faktor 3, mindestens um den Faktor 5 oder mindestens um den Faktor 10 höher als das Niederdruckniveau in dem Niederdruckpfad 7. Beispielsweise kann das Druckniveau in dem Hochdruckpfad 11 größer als 20 bar, größer als 25 bar oder größer als 30 bar sein.

In dem Hochdruckpfad 11 ist ein Druckbehälter 12 vorgesehen, in dem Druckluft mit dem Hochdruckniveau gespeichert ist. Der Hochdruckpfad 11 verzweigt in vier Hochdruckpfadzweige 13a, 13b, 13c, 13d, welche jeweils einem Reifen 4a, 4b, 4c, 4d zugeordnet sind.

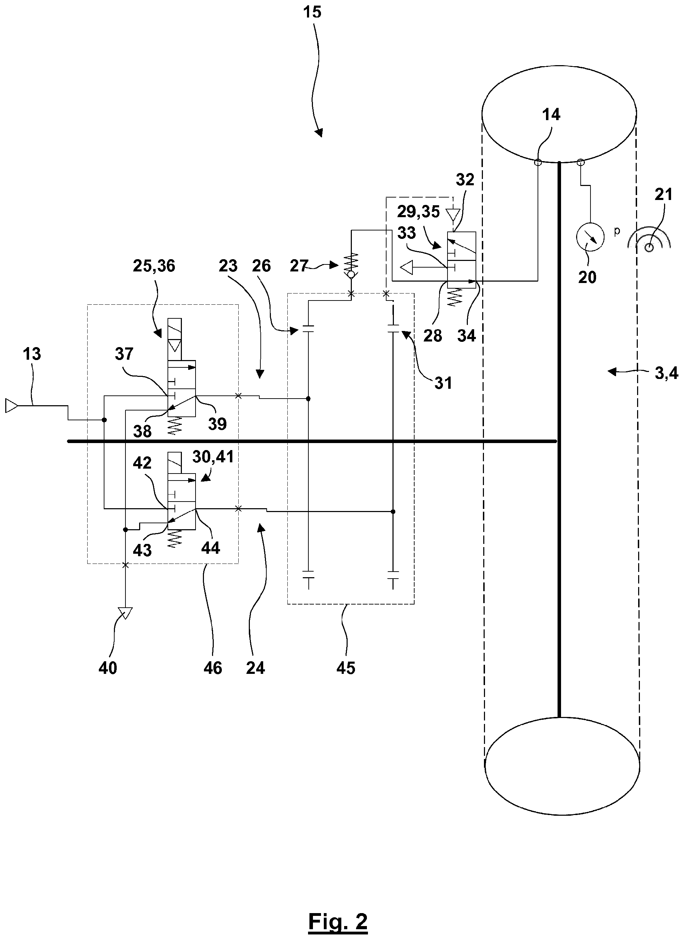

Die Hochdruckpfadzweige 13 sind über einen Anschluss 14a, 14b, 14c, 14d mit dem Inneren des Reifens 4 verbunden, wobei der Anschluss 14 vorzugsweise im Bereich der Felge oder des Felgenbetts des Fahrzeugrads 3 angeordnet und hieran befestigt ist. In dem Hochdruckpfadzweig 13 ist dem Anschluss 14 eine Druckluftverarbeitungseinrichtung 15a, 15b, 15c, 15d vorgeordnet, welche im Detail in Fig. 2 dargestellt ist.

Die Agrarfahrzeug-Reifendrucksteueranlage 5 verfügt über eine elektronische Steuereinheit 16. Hierbei kann es sich um eine beliebige, auch anderen Zwecken dienende elektronische Steuereinheit des Agrar-Zugfahrzeugs 2 handeln, insbesondere ein Motor-Steuergerät, eine ABS-Steuereinheit oder EBS-Steuereinheit, eine Steuereinheit für eine Luftfederungsanlage, eine in eine Druckluftaufbereitungseinrichtung für mehrere Verbraucherkreise integrierte Steuereinheit u. ä. Für das dargestellte Ausführungsbeispiel ist die Steuereinheit 16 zusammengefasst mit einer Bedieneinheit 17 und einer Anzeigeeinheit 18. Die Steuereinheit 16 steuert in im Folgenden noch näher beschriebener Weise über elektronische Steuerleitungen 19a, 19b, 19c, 19d die Funktion der Druckluftverarbeitungseinrichtung 15 und damit die Be- und Entlüftung der Reifen 4. Über die Bedieneinheit 17 kann der Benutzer des Agrar-Zugfahrzeugs 2 eine Bedienung insbesondere der Agrarfahrzeug-Reifendrucksteueranlage 5 auch mit manuellen Vorgaben vornehmen, die dann in der Steuerung oder Regelung der Agrarfahrzeug-Reifendrucksteueranlage 5 berücksichtigt werden. Über die Anzeigeeinheit 18 können dem Benutzer Betriebszustände der Agrarfahrzeug-Reifendrucksteueranlage 5, insbesondere Drücke in den Reifen 4, angezeigt werden, wobei auch anderweitige Betriebsgrößen an der Anzeigeeinheit 18 angezeigt werden können, die die Agrarfahrzeug-Reifendrucksteueranlage 5 oder auch andere funktionelle Baugruppen des Agrar-Zugfahrzeugs 2 betreffen.

Als optionale Besonderheit verfügen die Fahrzeugräder 3 jeweils über einen Drucksensor 20a, 20b, 20c, 20d, der den Druck in einem zugeordneten Reifen 4a, 4b, 4c, 4d erfasst. Der Drucksensor 20 ist dabei an dem Fahrzeugrad 3 (insbesondere an der Felge oder dem Felgenbett desselben) befestigt. Die Fahrzeugräder 3 verfügen des Weiteren über drahtlose Übertragungseinrichtungen 21a, 21b, 21c, 21d. Auch die drahtlosen Übertragungseinrichtungen 21 sind jeweils an den Fahrzeugrädern 3b (insbesondere im Bereich der Felge oder des Felgenbetts) angeordnet und an diesem befestigt. Die drahtlosen Übertragungseinrichtungen 21 kommunizieren jeweils mit einer gemeinsamen drahtlosen Empfangseinrichtung 22. Die Messsignale der Drucksensoren 20 werden über die drahtlosen Übertragungseinrichtungen 21 an die drahtlose Empfangseinrichtung 22 übertragen, welche dann die Messsignale der Steuereinheit 16 zur Verfügung stellt. In der Steuereinheit 16 werden diese Messsignale dann für die Regelung der Drücke in den Reifen 4 über die Agrarfahrzeug-Reifendrucksteueranlage 5 verwendet und berücksichtigt.

In **Fig. 2** ist exemplarisch eine Druckluftverarbeitungseinrichtung 15 in einem zu einem Reifen 4 eines Fahrzeugrads 3 führenden Hochdruckpfadzweig 13 dargestellt. In der Druckluftverarbeitungseinrichtung 15 verzweigt der Hochdruckpfadzweig 13 in einen Versorgungszweig 23 und einen Steuerzweig 24. Der Versorgungszweig 23 führt über eine Versorgungs-Ventileinrichtung 25, eine Versorgungs-Drehdurchführung 26, ein Rückschlagventil 27 zu einem Versorgungsanschluss 28 einer Reifendrucksteuereinrichtung 29. Hingegen führt der Steuerzweig 24 über eine Steuerdruck-Ventileinrichtung 30 und eine Steuerdruck-Drehdurchführung 31 zu einem Steueranschluss 32 der Reifendrucksteuereinrichtung 29.

Vorzugsweise ist die Reifendrucksteuereinrichtung 29 mit einem Ventil 35, hier einem 3/2-Wegeventil, gebildet. Die Reifendrucksteuereinrichtung 29 verfügt über einen mit einer Entlüftung verbundenen Entlüftungsanschluss 33. Des Weiteren weist die Reifendrucksteuereinrichtung 29 einen Reifenanschluss 34 auf, der hier unmittelbar mit dem Anschluss 14 des Reifens 4 verbunden ist. Das Rückschlagventil 27 und die Reifendrucksteuereinrichtung 29 sind an dem Fahrzeugrad 3 gehalten und rotieren mit diesem, was mittels der Versorgungs-Drehdurchführung 26 und der Steuerdruck-Drehdurchführung 31 ermöglicht ist.

Für das dargestellte Ausführungsbeispiel ist die Reifendrucksteuereinrichtung 29 als pneumatisch gesteuertes 3/2-Wegeventil ausgebildet. In der Betriebsstellung gemäß Fig. 2 in welcher der Steueranschluss 32 nicht mit einem Steuerdruck beaufschlagt ist, befindet sich die Reifendrucksteuereinrichtung 29 infolge der Wirkung einer Feder in einer Durchlassstellung, in welcher der Versorgungsanschluss 28 mit dem Reifenanschluss 34 verbunden ist und (je nach Betriebsstellung der Versorgungs-Ventileinrichtung 25) eine Belüftung des Reifens 4 möglich ist. Wird über die Steuerdruck-Ventileinrichtung 30 der Steueranschluss 32 mit einem Steuerdruck beaufschlagt, erfolgt die Umschaltung der Reifendrucksteuereinrichtung 29 in eine Entlüftungsstellung, in welcher der Reifenanschluss 34 mit dem Entlüftungsanschluss 33 verbunden ist und eine Entlüftung des Reifens 4 erfolgt.

Die Versorgungs-Ventileinrichtung 25 ist für das dargestellte Ausführungsbeispiel ein Ventil 36, welches hier ein 3/2-Wegeventil ist. Das Ventil 36 weist einen Versorgungsanschluss 37, einen Entlüftungsanschluss 38 und einen Ausgangsanschluss 39 auf. Der Versorgungsanschluss 37 ist mit dem Hochdruckpfadzweig 13 verbunden. Der Entlüftungsanschluss 38 ist mit einer Entlüftung 40 verbunden. Der Ausgangsanschluss 39 ist mit der Versorgungs-Drehdurchführung 26 verbunden. Für das dargestellte Ausführungsbeispiel ist das Ventil 36 elektropneumatisch gesteuert, wobei das elektrische Steuersignal von der Steuereinheit 16 erzeugt und über die Steuerleitung 19 übertragen wird. Infolge der elektropneumatischen Ansteuerung und der dabei wirksamen pneumatischen Verstärkung kann mittels beherrschbarer Steuerströme eine Schaltung großer Ventilquerschnitte des Ventils 36 erfolgen.

In der nicht angesteuerten Betriebsstellung, die in Fig. 2 wirksam ist, nimmt das Ventil 36 eine Entlüftungsstellung an, in welcher der Ausgangsanschluss 39 über den Entlüftungsanschluss 38 entlüftet wird. Hingegen kann das Ventil 36 über die elektronische Ansteuerung in die andere Betriebsstellung umgeschaltet werden, welche eine Belüftungsstellung ist. In dieser ist der Versorgungsanschluss 37 mit dem Ausgangsanschluss 39 verbunden.

Die Steuerdruck-Ventileinrichtung 30 ist für das Ausführungsbeispiel gemäß Fig. 2 ein Ventil 41, welches als 3/2-Wegeventil ausgebildet ist. In diesem Fall wird das Ventil 41 unmittelbar über die Steuereinheit 16 und die Steuerleitung 19 elektronisch gesteuert, wobei das Ventil 30 vorzugsweise kleinere Ventilquerschnitte aufweist als das Ventil 36. Das Ventil 41 verfügt über einen Versorgungsanschluss 42, einen Entlüftungsanschluss 43 und einen Ausgangsanschluss 44. Der Versorgungsanschluss ist mit dem Hochdruckpfadzweig 13 verbunden. Der Entlüftungsanschluss 43 ist mit der Entlüftung 40 verbunden. Der Ausgangsanschluss 44 ist mit der Steuerdruck-Drehdurchführung 31 verbunden. Ohne elektronische Ansteuerung nimmt das Ventil infolge der Wirkung einer Feder die in Fig. 2 wirksame Entlüftungsstellung ein, in welcher in dem Ventil 41 der Ausgangsanschluss 44 mit dem Entlüftungsanschluss 43 verbunden ist. Hingegen kann das Ventil 41 durch elektronische Ansteuerung umgeschaltet werden in die Belüftungsstellung, in welcher das Ventil 41 den Versorgungsanschluss 42 mit dem Ausgangsanschluss 44 verbindet.

Die Funktionsweise der Druckluftverarbeitungseinrichtung 15 gemäß Fig. 2 ist wie folgt:
Zunächst wird davon ausgegangen, dass sich die Versorgungs-Ventileinrichtung 25 in der Belüftungsstellung befindet, womit an dem Versorgungsanschluss 28 der Reifendrucksteuereinrichtung 29 Druck mit dem Hochdruckniveau des Hochdruckpfadzweigs 13 ansteht. Ist eine Belüftung des Reifens 4 gewünscht, wird die Steuerdruck-Ventileinrichtung 30 in die Entlüftungsstellung gesteuert, was für das dargestellte Ausführungsbeispiel ohne elektronische Ansteuerung infolge der Wirkung der Feder gewährleistet ist. Da an dem Steueranschluss 32 kein Steuerdruck anliegt, nimmt die Reifendrucksteuereinrichtung 29 die Belüftungsstellung an und die Druckluft wird mit dem Hochdruckniveau des Hochdruckpfadzweigs 13 dem Reifen 4 zugeführt.

Ist hingegen eine Entlüftung des Reifens 4 gewünscht, wird die Steuerdruck-Ventileinrichtung 30 elektronisch umgeschaltet in die Belüftungsstellung, womit Druck an dem Steueranschluss 32 der Reifendrucksteuereinrichtung 29 anliegt. Die Reifendrucksteuereinrichtung 29 nimmt somit die Entlüftungsstellung ein und Druckluft kann aus dem Reifen 4 über den Entlüftungsanschluss 33 entlüftet werden.

Soll schließlich der Reifen 4 abgesperrt werden, wird die Steuerdruck-Ventileinrichtung 30 in die Entlüftungsstellung gesteuert, womit die Reifendrucksteuereinrichtung 29 die Belüftungsstellung einnimmt. Wenn gleichzeitig die Versorgungs-Ventileinrichtung 25 in die Entlüftungsstellung gemäß Fig. 2 gesteuert wird, ist der Eingangsanschluss des Rückschlagventils 27 mit der Entlüftung 40 verbunden, während an dem Ausgangsanschluss des Rückschlagventils 27 der Druck in dem Reifen 4 ansteht. Somit sperrt das Rückschlagventil 27 und es kann keine Druckluft aus dem Reifen 4 entweichen.

Für das in Fig. 2 dargestellte Ausführungsbeispiel sind die Versorgungs-Drehdurchführung 26 und die Steuerdruck-Drehdurchführung 31 in einer gemeinsamen Drehdurchführung 45 zusammengefasst.

Des Weiteren sind die Versorgungs-Ventileinrichtung 25 und die Steuerdruck-Ventileinrichtung 30 in einer Baueinheit 46 zusammengefasst.

**Fig. 3** zeigt eine mögliche Ausführungsform einer zwischen dem Hochdruckpfad 11 und dem Niederdruckpfad 7 angeordneten Druckerhöhungseinrichtung 10. Diese weist einen Druckbooster 47 auf. Der Druckbooster 47 weist eine Betätigungs-Zylindereinheit 48 und eine Verdichtungs-Zylindereinheit 49 auf, die jeweils als doppelt wirkende Zylindereinheiten ausgebildet ist. Ein Betätigungskolben 50 der Betätigungs-Zylindereinheit 48 trennt dabei Betätigungs-Druckräume 51, 52. Entsprechend trennt in der Verdichtungs-Zylindereinheit 49 ein Verdichtungskolben 53 Verdichtungs-Druckräume 54, 55. Die mit dem Druckbooster 47 herbeiführbare Druckerhöhung entspricht dabei dem Verhältnis der Kolbenflächen des Betätigungskolbens 50 und des Verdichtungskolbens 53. Durch alternierende und gegenläufige Verbindung der Betätigungs-Druckräume 51, 52 einerseits mit dem Niederdruckpfad 5 und andererseits mit einer Entlüftung kann mittels der Betätigungs-Zylindereinheit 48 eine hin- und hergehende Betätigungskraft erzeugt werden, die über eine Kolbenstange 56 an den Verdichtungskolben 53 übertragen wird. Die hierdurch herbeigeführte alternierende Bewegung des Verdichtungskolbens 53 verdichtet alternierend Druckluft in einer der Verdichtungs-Druckräume 54, 55, die dann zu dem Hochdruckpfad 11 ausgeschoben werden kann. Zu diesem Zweck ist ein Eingangsanschluss 57 des Verdichtungs-Druckraums 54 über ein Rückschlagventil 58 mit dem Niederdruckpfad 7 verbunden und ein Eingangsanschluss 59 des Verdichtungs-Druckraums 55 ist über ein Rückschlagventil 60 mit dem Niederdruckpfad 7 verbunden. Ein Ausgangsanschluss 61 ist über ein Rückschlagventil 62 mit dem Hochdruckpfad 11 verbunden und ein Ausgangsanschluss 63 ist über ein Rückschlagventil 64 mit dem Hochdruckpfad 11 verbunden. Die Rückschlagventile 58, 60, 62, 64 öffnen dabei für eine Strömung von dem Niederdruckpfad 7 in Richtung des Hochdruckpfads 11 und sperren die Strömung von Druckluft in die entgegengesetzte Richtung.

Wird infolge der Betätigungskraft der Verdichtungskolben 53 nach links bewegt, kann sich der Druckraum 55 mit über das Rückschlagventil 60 strömender Druckluft aus dem Niederdruckpfad 7 füllen. Mit der Bewegung wird Druckluft aus dem Verdichtungs-Druckraum 54 bei sperrendem Rückschlagventil 58 über das sich öffnende Rückschlagventil 62 in Richtung des Hochdruckpfads 11 mit einem Druck entsprechend dem Hochdruckniveau ausgeschoben. Das Entsprechende gilt für eine Bewegung in die entgegengesetzte Richtung.

Die alternierende Druckbeaufschlagung der Betätigungs-Druckräume 51, 52 der Betätigungs-Zylindereinheit 48 erfolgt durch alternierende Umschaltung des Betätigungsventils 65. Für das dargestellte Ausführungsbeispiel ist das Betätigungsventil 65 als 5/2-Wegeventil ausgebildet. Dieses verfügt über einen Versorgungsanschluss 66, einen Entlüftungsanschluss 67, einen weiteren Entlüftungsanschluss 68 und Ausgangsanschlüsse 69, 70. Der Ausgangsanschluss 69 ist mit dem Betätigungs-Druckraum 51 verbunden, während der Ausgangsanschluss 70 mit dem Betätigungs-Druckraum 52 verbunden ist. Der Versorgungsanschluss 66 ist mit dem Niederdruckpfad 7 verbunden.

In der in Fig. 3 wirksamen Betriebsstellung des Betätigungsventils 65 verbindet dieses den Ausgangsanschluss 69 mit dem Entlüftungsanschluss 68, womit der Betätigungs-Druckraum 51 entlüftet wird. Hingegen verbindet in dieser Betriebsstellung das Betätigungsventil 65 den Versorgungsanschluss 66 mit dem Ausgangsanschluss 70, womit der Betätigungs-Druckraum 52 druckbeaufschlagt wird.

In der anderen Betriebsstellung des Betätigungsventils 65 verbindet dieses den Versorgungsanschluss 66 mit dem Ausgangsanschluss 69, womit der Betätigungs-Druckraum 51 belüftet wird. Gleichzeitig werden in dieser Betriebsstellung der Ausgangsanschluss 70 und der Entlüftungsanschluss 67 miteinander verbunden, womit der Betätigungs-Druckraum 52 entlüftet wird. Grundsätzlich kann ein Hin- und Herschalten des Betätigungsventils 65 mit einem elektromagnetischen Hin- und Herschalten bei Steuerung oder Regelung durch die Steuereinheit 16 erfolgen. Für das Ausführungsbeispiel gemäß Fig. 3 erfolgt aber eine alternierende pneumatische Umschaltung durch zwei elektronisch durch die Steuereinheit 16 alternierend umgeschaltete Umschaltventile 71, 72. Die Umschaltventile 71, 72 sind identisch ausgebildet, so dass exemplarisch das Umschaltventil 71 geschrieben wird. Das Umschaltventil 71 verfügt über einen Ausgangsanschluss 73, der mit einem pneumatischen Steueranschluss 74 des Betätigungsventils 65 verbunden, während ein entsprechender Ausgangsanschluss 73 des Umschaltventils 72 mit einem Steueranschluss 75 des Umschaltventils 65 verbunden ist, wobei der Steueranschluss 75 entgegengesetzt zu dem Steueranschluss 74 wirkt. Die Umschaltventile 71, 72 verfügen des Weiteren jeweils über einen Versorgungsanschluss 76 und einen Entlüftungsanschluss 77. Der Versorgungsanschluss 76 ist mit dem Niederdruckpfad 7 verbunden. Die Umschaltventile 71, 72 sind als 3/2-Magnetventile ausgebildet.

Die Steuereinheit 16 steuert gleichzeitig das Umschaltventil 71 in die in Fig. 3 wirksame Entlüftungsstellung und das Umschaltventil 72 in die in Fig. 3 nicht wirksame Belüftungsstellung, womit das Betätigungsventil 65 in die in Fig. 3 wirksame Betriebsstellung überführt wird und eine Bewegung des Betätigungskolbens 50 in Fig. 3 nach links hervorgerufen wird.

Nach einer vorgegebenen Zeitspanne (oder nach einer Erfassung, dass der Betätigungskolben 50 seinen vorgegebenen Gesamthub ausgeführt hat), erfolgt durch die Steuereinheit 16 die Umschaltung der Umschaltventile 71, 72 derart, dass das Umschaltventil 71 seine Belüftungsstellung einnimmt und das Umschaltventil 72 seine Entlüftungsstellung einnimmt. Dies hat die Umschaltung des Betätigungsventils 65 in die in Fig. 3 nicht wirksame Betriebsstellung zur Folge, womit eine Druckbeaufschlagung der Druckräume 51, 52 der Betätigungs-Zylindereinheit 48 erfolgt und eine Bewegung des Betätigungskolbens 50 nach rechts herbeigeführt wird. Es erfolgt eine alternierende Hin- und Herschaltung der Umschaltventile 71, 72, womit der Druckbooster 47 immer wieder eine Verdichtung vornimmt und dem Hochdruckpfad 11 Druckluft mit dem Hochdruckniveau zuführt.

Für das dargestellte und beschriebene Ausführungsbeispiel erfolgt die Umschaltung der Umschaltventile 71, 72 durch eine elektronische Ansteuerung durch die Steuereinheit 16, was insbesondere die Erfassung des Stellwegs des Druckboosters 47 erfordert. Alternativ möglich ist, dass die Umschaltventile 71, 72 als mechanische Ventile ohne elektronische Ansteuerung ausgebildet sind, wobei in diesem Fall die Umschaltung der Umschaltventile 71, 72 bewegungsgesteuert durch die Bewegung des Betätigungskolben 50 oder des Verdichtungskolbens 53 mit der Annäherung an die Endlage oder mit dem Durchlaufen des Arbeitshubs erfolgen kann. In diesem Fall sind vorzugsweise der Druckbooster 47 und die Umschaltventile 71, 72 (und unter Umständen auch das Betätigungsventil 65) in einer gemeinsamen Baueinheit angeordnet, welche die Bewegungssteuerung durch geeignete Betätigungselemente im Endbereich der Arbeitshübe ermöglicht und eine geeignete mechanische Übertragungseinrichtung von den Betätigungselementen zu den Umschaltventilen 71, 72 aufweist.

Möglich ist des Weiteren, dass das Betätigungsventil 65 erst mit dem Überschreiten eines Schwellwerts des an dem jeweiligen druckbeaufschlagten Steueranschluss 74, 75 anliegenden Steuerdrucks umgeschaltet wird . Dies kann beispielsweise dadurch gewährleistet werden, dass das Betätigungsventil 65 jeweils in einer eingenommenen Betriebsstellung durch einen Magneten mit einer Magnetkraft gesichert wird. Erst wenn die Umschaltkraft, die von dem an dem Steueranschluss 74, 75 wirkenden Steuerdruck erzeugt wird, größer wird als die Magnetkraft, kann das Betätigungsventil 65 seine Betriebsstellung wechseln.

**Fig. 4** zeigt eine alternative Ausgestaltung einer Druckerhöhungseinrichtung 10: Hier ist zwischen dem Hochdruckpfad 11 und dem Niederdruckpfad 7 eine von einem Motor 78, der auch von der Steuereinheit 16 gesteuert oder geregelt werden kann, angetriebene Pumpe 79 zwischengeschaltet. Für das dargestellte Ausführungsbeispiel ist eine Bypassleitung 80 vorhanden. Die Bypassleitung 80 umgeht die Pumpe 79 und verbindet ebenfalls den Hochdruckpfad 11 mit dem Niederdruckpfad 7. In der Bypassleitung 80 ist ein Rückschlagventil 81 angeordnet, welches in Richtung von dem Niederdruckpfad 7 in Richtung des Hochdruckpfads 11 öffnet. Kommt es zu einem Defekt des Motors 78 oder der Pumpe 79, kann Druckluft über den Niederdruckpfad 7, die Bypassleitung 80 und das in diese Richtung öffnende Rückschlagventil 81 zu dem Hochdruckpfad 11 gelangen, wobei dann allerdings an dem Hochdruckpfad nicht das Hochdruckniveau mehr aufrechterhalten werden kann, aber dennoch eine Art Notbetrieb mit dem Niederdruckniveau möglich ist.

**Fig. 5** zeigt eine Agrarfahrzeug-Reifendrucksteueranlage 5 für ein als Agrar-Anhänger 82 ausgebildetes Agrarfahrzeug 1. Der Agrar-Anhänger 82 kann mit einem Agrar-Zugfahrzeug 2 (mit diesem zugeordneter weiterer Agrarfahrzeug-Reifendrucksteueranlage 5) zu einem Agrarfahrzeugzug verbunden werden kann. Die Kopplung zwischen dem Agrar-Anhänger 82 und dem Agrar-Zugfahrzeug 2 erfolgt über eine mechanische Kopplung 83, bei der es sich beispielsweise um eine Deichsel handeln kann. Darüber hinaus erfolgt eine pneumatische Kopplung 84, die beispielsweise über einen Kupplungskopf oder ein sogenanntes multifunktionales elektropneumatisches Interface (auch "EPI-Modul" genannt) erfolgen kann. Möglich ist, dass über die pneumatische Kopplung 84 die Agrarfahrzeug-Reifendrucksteueranlage 5 des Agrar-Anhängers 82 mit dem Hochdruckpfad 11 der Agrarfahrzeug-Reifendrucksteueranlage 5 des Agrar-Zugfahrzeugs 2 verbunden ist. Für das in Fig. 5 dargestellte Ausführungsbeispiel erfolgt über die pneumatische Kopplung 84 aber eine Kopplung eines Niederdruckpfads 85 des Agrar-Anhängers 82 mit dem Niederdruckpfad 7 des Agrar-Zugfahrzeugs 2. Die Agrarfahrzeug-Reifendrucksteueranlage 5 des Agrar-Anhängers 82 ist dann grundsätzlich entsprechend der Agrarfahrzeug-Reifendrucksteueranlage 5 des Agrar-Zugfahrzeugs 2 ausgebildet, so dass auf die diesbezügliche Beschreibung verwiesen wird. Auch der Agrar-Anhänger 82 verfügt über eine Steuereinheit 16, welche drahtlos mit den Komponenten der Agrarfahrzeug-Reifendrucksteueranlage 5, die einerseits drahtlos mittels der Empfangseinrichtung 22 mit den Übertragungseinrichtungen 21 für die Messsignale der den Fahrzeugrädern 3 zugeordneten Drucksensoren 20 kommuniziert und andererseits über die elektrische Steuerleitungen 19 mit den elektronisch gesteuerten Bauelementen der Agrarfahrzeug-Reifendrucksteueranlage 5 kommuniziert. Möglich ist, dass die Steuereinheit 16 des Agrar-Anhängers 82 drahtgebunden über eine elektronische Kopplung zwischen dem Agrar-Zugfahrzeug 2 und dem Agrar-Anhänger 82 oder drahtlos mit der Steuereinheit 16 der Agrarfahrzeug-Reifendrucksteueranlage 5 des Agrar-Zugfahrzeugs 2 kommuniziert. Möglich ist auch, dass die Steuereinheit 16 einen Repeater aufweist, welche den Austausch der Kommunikation zwischen Steuereinheiten des Agrar-Anhängers 82 und des Agrar-Zugfahrzeugs 2 ermöglicht. In den unterschiedlichen Ausgestaltungen der Agrarfahrzeug-Reifendrucksteueranlage 5 bilden die stromaufwärts der Drehdurchführung angeordneten Komponenten, insbesondere die Versorgungs-Ventileinrichtung 25, die Steuerdruck-Ventileinrichtung 30, der Druckbehälter 12, der Niederdruckpfad 7, der Hochdruckpfad 11 und die Druckerhöhungseinrichtung 10 (unter Umständen mit weiteren pneumatischen Bauelementen wie der vorgeordnete Kompressor, Druckregler, Lufttrockner, Mehrkreisschutzventile, Sicherheitsventile oder Druckbegrenzungsventile) eine Druckluftversorgungseinrichtung 86.

In der vorliegenden Beschreibung wird teilweise für Bauelemente, die sich hinsichtlich der Ausgestaltung oder Funktion entsprechen, dieselben Bezugszeichen verwendet, wobei diese dann durch ergänzende Buchstaben a, b, ... unterschieden werden können. Auf diese Bauelemente wird dann auch ohne Verwendung des ergänzenden Buchstabens Bezug genommen, womit dann sämtliche derartige Bauelemente oder einzelne hiervon gemeint sein können.

Wenn in der vorliegenden Anmeldung von einem Reifen 4 die Rede ist, kann es sich auch um einen einem Fahrzeugrad 3 zugeordneten Doppel- oder Mehrfachreifen handeln.

Gemäß einem Aspekt der Erfindung erfolgt die Be- und Entlüftung durch die Reifendrucksteuereinrichtung 29 an dem Fahrzeugrad 3 selbst, während die Erzeugung des pneumatischen Steuersignals durch die Steuerdruck-Ventileinrichtung 30 fahrzeugseitig (Fahrzeugrahmen, Fahrzeugaufbau) erfolgt mit der Übertragung des dort erzeugten pneumatischen Steuerdrucks über die Steuerdruck-Drehdurchführung 31 an das Fahrzeugrad 3 und die Reifendrucksteuereinrichtung 29.

### BEZUGSZEICHENLISTE

- 1: Agrarfahrzeug
- 2: Agrar-Zugfahrzeug
- 3: Fahrzeugrad
- 4: Reifen
- 5: Agrarfahrzeug-Reifendrucksteueranlage
- 6: Eingang
- 7: Niederdruckpfad
- 8: Druckbehälter
- 9: Anschluss, Kupplungskopf
- 10: Druckerhöhungseinrichtung
- 11: Hochdruckpfad
- 12: Druckbehälter
- 13: Hochdruckpfadzweig
- 14: Anschluss
- 15: Druckluftverarbeitungseinrichtung
- 16: elektronische Steuereinheit
- 17: Bedieneinheit
- 18: Anzeigeeinheit
- 19: elektrische Steuerleitung
- 20: Drucksensor
- 21: drahtlose Übertragungseinrichtung
- 22: drahtlose Empfangseinrichtung
- 23: Versorgungszweig
- 24: Steuerzweig
- 25: Versorgungs-Ventileinrichtung
- 26: Versorgungs-Drehdurchführung
- 27: Rückschlagventil
- 28: Versorgungsanschluss
- 29: Reifendrucksteuereinrichtung
- 30: Steuerdruck-Ventileinrichtung
- 31: Steuerdruck-Drehdurchführung
- 32: Steueranschluss
- 33: Entlüftungsanschluss
- 34: Reifenanschluss
- 35: Ventil
- 36: Ventil
- 37: Versorgungsanschluss
- 38: Entlüftungsanschluss
- 39: Ausgangsanschluss
- 40: Entlüftung
- 41: Ventil
- 42: Versorgungsanschluss
- 43: Entlüftungsanschluss
- 44: Ausgangsanschluss
- 45: Drehdurchführung
- 46: Baueinheit
- 47: Druckbooster
- 48: Betätigungs-Zylindereinheit
- 49: Verdichtungs-Zylindereinheit
- 50: Betätigungskolben
- 51: Betätigungs-Druckraum
- 52: Betätigungs-Druckraum
- 53: Verdichtungskolben
- 54: Verdichtungs-Druckraum
- 55: Verdichtungs-Druckraum
- 56: Kolbenstange
- 57: Eingangsanschluss
- 58: Rückschlagventil
- 59: Eingangsanschluss
- 60: Rückschlagventil
- 61: Ausgangsanschluss
- 62: Rückschlagventil
- 63: Ausgangsanschluss
- 64: Rückschlagventil
- 65: Betätigungsventil
- 66: Versorgungsanschluss
- 67: Entlüftungsanschluss
- 68: Entlüftungsanschluss
- 69: Ausgangsanschluss
- 70: Ausgangsanschluss
- 71: Umschaltventil
- 72: Umschaltventil
- 73: Ausgangsanschluss
- 74: Steueranschluss
- 75: Steueranschluss
- 76: Versorgungsanschluss
- 77: Entlüftungsanschluss
- 78: Motor
- 79: Pumpe
- 80: Bypassleitung
- 81: Rückschlagventil
- 82: Agrar-Anhänger
- 83: mechanische Kopplung
- 84: pneumatische Kopplung
- 85: Niederdruckpfad
- 86: Druckluftversorgungseinrichtung

## Patentansprüche

1. Agrarfahrzeug-Reifendrucksteueranlage (5) mit
a) einer fahrzeugseitigen Druckluftversorgungseinrichtung (86),
b) einer Reifendrucksteuereinrichtung (29), über welche die Belüftung und die Entlüftung eines Reifens (4) steuerbar ist und
c) einer Drehdurchführung (45), über die die Druckluftversorgungseinrichtung (86) mit dem Reifen (4) pneumatisch verbunden ist,
d) wobei die Reifendrucksteuereinrichtung (29) zwischen der Drehdurchführung (45) und dem Reifen (4) angeordnet ist und an dem im Fahrbetrieb rotierenden Fahrzeugrad (3) befestigt ist und
e) die Drehdurchführung (45) eine Versorgungs-Drehdurchführung (26) aufweist,
**dadurch gekennzeichnet, dass**
f) die Reifendrucksteuereinrichtung (29) ein Ventil (35) aufweist, welches
fa) einen Versorgungsanschluss (28), der mit der Versorgungs-Drehdurchführung (26) verbunden ist, und
fb) einen Entlüftungsanschluss (33), und
fc) einen Reifenanschluss (34), der mit dem Reifen (4) verbunden ist, und
fd) einen pneumatischen Steueranschluss (32), der mit einer Steuerdruck-Drehdurchführung (31) verbunden ist,
aufweist und ein 3/2-Wegeventil mit einer Belüftungsstellung und einer Entlüftungsstellung ohne eine Sperrstellung ist, und
g) zwischen dem Versorgungsanschluss (28) und der Versorgungs-Drehdurchführung (26) ein in Richtung des Versorgungsanschlusses (28) öffnendes Rückschlagventil (27) angeordnet ist.

2. Agrarfahrzeug-Reifendrucksteueranlage (5) nach Anspruch 1, **dadurch gekennzeichnet, dass** die fahrzeugseitige Druckluftversorgungseinrichtung (86) einen Niederdruckpfad (7) und einen Hochdruckpfad (11) aufweist, zwischen denen eine Druckerhöhungseinrichtung (10) angeordnet ist, wobei die Reifendrucksteuereinrichtung (29) an den Hochdruckpfad (11) angeschlossen ist.

3. Agrarfahrzeug-Reifendrucksteueranlage (5) nach Anspruch 2, **dadurch gekennzeichnet, dass** die Druckerhöhungseinrichtung (10) eine Pumpe (79) oder einen Druckbooster (47) aufweist.

4. Agrarfahrzeug-Reifendrucksteueranlage (5) nach Anspruch 2 oder 3, **dadurch gekennzeichnet, dass** der Druckerhöhungseinrichtung (10) eine Bypassleitung (80) parallelgeschaltet ist, welche eine Druckluftversorgung des Hochdruckpfades (11) aus dem Niederdruckpfad (7) unter Umgehung der Druckerhöhungseinrichtung (10) ermöglicht.

5. Agrarfahrzeug-Reifendrucksteueranlage (5) nach einem der Ansprüche 2 bis 4, **dadurch gekennzeichnet, dass**
a) ein Druckbehälter (12) in dem Hochdruckpfad (11) angeordnet ist und/oder
b) ein Druckbehälter (12) in dem Niederdruckpfad (7) angeordnet ist.

6. Agrarfahrzeug-Reifendrucksteueranlage (5) nach einem der vorhergehenden Ansprüche, **dadurch gekennzeichnet, dass** über die Steuerdruck-Drehdurchführung (31) ein pneumatischer Steuerdruck übertragen wird, welcher die Reifendrucksteuereinrichtung (29) steuert.

7. Agrarfahrzeug-Reifendrucksteueranlage (5) nach einem der vorhergehenden Ansprüche, **dadurch gekennzeichnet, dass** die Versorgungs-Drehdurchführung (26) oder ein nachgeordnetes Ventil (27) der Reifendrucksteuereinrichtung (29) nur eine unidirektionale Übertragung von Druckluft zur Versorgung der Reifendrucksteuereinrichtung (29) erlaubt.

8. Agrarfahrzeug-Reifendrucksteueranlage (5) nach einem der vorhergehenden Ansprüche, **dadurch gekennzeichnet, dass** der Versorgungs-Drehdurchführung (26) eine Versorgungs-Ventileinrichtung (25) vorgeordnet ist, über die die Versorgungs-Drehdurchführung (26) belüftet und entlüftet werden kann.

9. Agrarfahrzeug-Reifendrucksteueranlage (5) nach einem der vorhergehenden Ansprüche, **dadurch gekennzeichnet, dass** der Steuerdruck-Drehdurchführung (31) eine Steuerdruck-Ventileinrichtung (30) vorgeordnet ist, über die die Steuerdruck-Drehdurchführung (31) belüftet und entlüftet werden kann.

10. Agrarfahrzeug-Reifendrucksteueranlage (5) nach Anspruch 8 und 9, **dadurch gekennzeichnet, dass** die Steuerdruck-Ventileinrichtung (30) und die Versorgungs-Ventileinrichtung (25) in einer Baueinheit (46) angeordnet sind.

11. Agrarfahrzeug-Reifendrucksteueranlage (5) nach einem der vorhergehenden Ansprüche, **dadurch gekennzeichnet, dass**
a) ein Drucksensor (20) vorhanden ist, der ein Messsignal für den Druck in dem Reifen (4) erfasst, und
b) eine drahtlose Übertragungseinrichtung (21) vorhanden ist, über welche drahtlos das Messsignals für den Druck an eine elektronische Steuereinheit (16) erfolgt.

12. Agrar-Zugfahrzeug (2) oder Agrar-Anhänger (82) mit einer Agrarfahrzeug-Reifendrucksteueranlage (5) nach einem der vorhergehenden Ansprüche.

13. Agrar-Zugfahrzeug (2) oder Agrar-Anhänger (82) nach Anspruch 12, **dadurch gekennzeichnet, dass**
a) der Hochdruckpfad (11) zu mehreren Hochdruckpfadzweigen (13a, 13b, ...) verzweigt,
b) die Hochdruckpfadzweige (13a, 13b, ...) jeweils zu einem Reifen (4a, 4b, ...) führen und
c) in den Hochdruckpfadzweigen (13a, 13b, ...) jeweils eine an dem Fahrzeugrad (3a, 3b, ...) befestigte Reifendrucksteuereinrichtung (29a, 29b, ...) und eine Drehdurchführung (45a, 45b, ...) angeordnet ist.

14. Agrarfahrzeugzug mit einem Agrar-Zugfahrzeug (2) nach Anspruch 12 oder 13 und einem Agrar-Anhänger (82) nach Anspruch 12 oder 13, wobei
a) in dem Agrar-Anhänger (82) mehrere Hochdruckpfadzweige (13a, 13b, ...) vorhanden sind,
b) die Hochdruckpfadzweige (13a, 13b, ...) jeweils zu einem Reifen (4a, 4b, ...) führen und
c) in den Hochdruckpfadzweigen (13a, 13b, ...) jeweils eine an einem Fahrzeugrad (3a, 3b, ...) befestigte Reifendrucksteuereinrichtung (29a, 29b, ...) und eine Drehdurchführung (45a, 45b, ...) angeordnet ist.

## Claims

1. Agricultural vehicle tire pressure control system (5), comprising
a) a vehicle-sided compressed air supply device (86),
b) a tire pressure control device (29) by which it is possible to control the pressurization and de-pressurization of a tire (4) and
c) a rotary feedthrough (45) which pneumatically connects the compressed air supply device (86) to the tire (4),
d) the tire pressure control device (29) being arranged between the rotary feedthrough (45) and the tire (4) and the tire pressure control device (29) being mounted to the vehicle wheel (3) which rotates in the driving mode and
e) the rotary feedthrough (45) comprising a supply rotary feedthrough (26)
**characterised in that**
f) the tire pressure control device (29) comprises a valve (35) which comprises
fa) a supply port (28) which is connected to the supply rotary feedthrough (26), and
fb) a de-pressurizing port (33) and
fc) a tire port (34) connected to the tire (4) and
fd) a pneumatic control port (32) which is connected to a control pressure rotary feedthrough (31)
and which is embodied as 3/2-way valve which comprises a pressurizing position and a de-pressurizing position and does not comprise a closed position and
g) a check valve (27) opening towards the supply port (28) is arranged between the supply port (28) and the supply rotary feedthrough (26).

2. Agricultural vehicle tire pressure control system (5) of claim 1, **characterised in that** the vehicle-sided compressed air supply device (86) comprises a low pressure path (7) and a high pressure path (11), a pressure increasing device (10) being arranged between the low pressure path (7) and the high pressure path (11) and the tire pressure control device (29) being connected to the high pressure path (11).

3. Agricultural vehicle tire pressure control system (5) of claim 2, **characterised in that** the pressure increasing device (10) comprises a pump (79) or a pressure booster (47).

4. Agricultural vehicle tire pressure control system (5) of claim 2 or 3, **characterised in that** a bypass line (80) is arranged parallel to the pressure increasing device (10), the bypass line (80) allowing a supply of compressed air to the high pressure path (11) from the low pressure path (7) under circumvention of the pressure increasing device (10).

5. Agricultural vehicle tire pressure control system (5) of one of claims 2 to 4, **characterised in that**
a) a pressure reservoir (12) is arranged in the high pressure path (11) and/or
b) a pressure reservoir (12) is arranged in the low pressure path (7).

6. Agricultural vehicle tire pressure control system (5) of one of the preceding claims, **characterised in that** a pneumatic control pressure which controls the tire pressure control device (29) is transferred via the control pressure rotary feedthrough (31).

7. Agricultural vehicle tire pressure control system (5) of one of the preceding claims, **characterised in that** the supply rotary feedthrough (26) or a downstream valve (27) of the tire pressure control device (29) only allows an uni-directional transfer of compressed air for the supply of the tire pressure control device (29).

8. Agricultural vehicle tire pressure control system (5) of one of the preceding claims, **characterised in that** a supply valve device (25) by which it is possible to pressurize and de-pressurize the supply rotary feedthrough (26) is arranged upstream from the supply rotary feedthrough (26).

9. Agricultural vehicle tire pressure control system (5) of one of the preceding claims, **characterised in that** a control pressure valve device (30) by which it is possible to pressurize and de-pressurize the controlled pressure rotary feedthrough (31) is arranged upstream from the controlled pressure rotary feedthrough (31).

10. Agricultural vehicle tire pressure control system (5) of claim 8 and 9, **characterised in that** the control pressure valve device (30) and the supply valve device (25) are arranged in a constructional unit (46).

11. Agricultural vehicle tire pressure control system (5) of one of the preceding claims, **characterised in that**
a) a pressure sensor (20) is provided which senses a measurement signal for the pressure in the tire (4) and
b) a wireless transmission device (21) is provided by which the measurement signal for the pressure is wirelessly transmitted to an electronic control unit (16).

12. Agricultural tractor (2) or agricultural trailer (82) comprising an agricultural vehicle tire pressure control system (5) of one of the preceding claims.

13. Agricultural tractor (2) or agricultural trailer (82) of claim 12, **characterised in that**
a) the high pressure path (11) branches to a plurality of high pressure path branches (13a, 13b, ...),
b) the high pressure path branches (13a, 13b, ...) each leading to a tire (4a, 4b, ...) and
c) a tire pressure control device (29a, 29b, ...) which is mounted to the vehicle wheel (3a, 3b, ...) and a rotary feedthrough (45a, 45b, ...) are arranged in each of the high pressure path branches (13a, 13b, ...).

14. Agricultural vehicle combination comprising an agricultural tractor (2) of claim 12 or 13 and an agricultural trailer (82) of claim 12 or 13 wherein
a) in the agricultural trailer (82) a plurality of high pressure path branches (13a, 13b, ...) is provided,
b) the high pressure path branches (13a, 13b, ...) each leading to a tire (4a, 4b, ...) and
c) a tire pressure control device (29a, 29b, ...) which is mounted to a vehicle wheel (3a, 3b, ...) and a rotary feedthrough (45a, 45b, ...) are arranged in each of the high pressure path branches (13a, 13b, ...).

## Revendications

1. Installation de contrôle de la pression des pneus pour véhicule agricole (5) avec
a) un dispositif d'alimentation en air comprimé côté véhicule (86),
b) un dispositif de contrôle de la pression des pneus (29), par l'intermédiaire duquel le gonflage et le dégonflage d'un pneu (4) peut être contrôlé et
c) un passage rotatif (45), par l'intermédiaire duquel le dispositif d'alimentation en air comprimé (86) est relié pneumatiquement avec le pneu (4),
d) dans lequel le dispositif de contrôle de la pression des pneus (29) est disposé entre le passage rotatif (45) et le pneu (4) et est fixé à la roue du véhicule (3) tournant lors du déplacement et
e) le passage rotatif (45) comprend un passage rotatif d'alimentation (26),
**caractérisée en ce que**
f) le dispositif de contrôle de la pression des pneus (29) comprend une soupape (35) qui comprend
fa) un raccord d'alimentation (28), qui est relié avec le passage rotatif d'alimentation (26) et
fb) un raccord de dégonflage (33) et
fc) un raccord de pneu (34), qui est relié avec le pneu (4) et
fd) un raccord de contrôle pneumatique (32), qui est relié avec un passage rotatif de pression de contrôle (31),
et une vanne 3/2 voies avec une position de gonflage et une position de dégonflage sans position de blocage et
g) entre le raccord d'alimentation (28) et le passage rotatif d'alimentation (26), est disposé un clapet anti-retour (27) s'ouvrant dans la direction du raccord d'alimentation (28).

2. Installation de contrôle de la pression des pneus pour véhicule agricole (5) selon la revendication 1, **caractérisée en ce que** le dispositif d'alimentation en air comprimé côté véhicule (86) comprend une voie à basse pression (7) et une voie à haute pression (11) entre lesquelles est disposé un dispositif d'augmentation de la pression (10), dans lequel le dispositif de contrôle de la pression des pneus (29) est raccordé à la voie à haute pression (11).

3. Installation de contrôle de la pression des pneus pour véhicule agricole (5) selon la revendication 2, **caractérisée en ce que** le dispositif d'augmentation de la pression (10) comprend une pompe (79) ou un booster de pression (47).

4. Installation de contrôle de la pression des pneus pour véhicule agricole (5) selon la revendication 2 ou 3, **caractérisée en ce que** le dispositif d'augmentation de la pression (10) est branché en parallèle à une conduite de dérivation (80), qui permet une alimentation en air comprimé de la voie à haute pression (11) à partir de la voie à basse pression (7) en contournant le dispositif d'augmentation de la pression (10).

5. Installation de contrôle de la pression des pneus pour véhicule agricole (5) selon l'une des revendications 2 à 4, **caractérisée en ce que**
a) un réservoir sous pression (12) est disposé dans la voie à haute pression (11) et/ou
b) un réservoir sous pression (12) est disposé dans la voie à basse pression (7).

6. Installation de contrôle de la pression des pneus pour véhicule agricole (5) selon l'une des revendications précédentes, **caractérisée en ce que** le passage rotatif à pression de contrôle (31) transmet une pression pneumatique de contrôle qui contrôle le dispositif de contrôle de la pression des pneus (29).

7. Installation de contrôle de la pression des pneus pour véhicule agricole (5) selon l'une des revendications précédentes, **caractérisée en ce que** le passage rotatif d'alimentation (26) ou une soupape (27), disposée en aval, du dispositif de contrôle de la pression des pneus (29), permet uniquement une transmission unidirectionnelle de l'air comprimé pour l'alimentation du dispositif de contrôle de la pression des pneus (29).

8. Installation de contrôle de la pression des pneus pour véhicule agricole (5) selon l'une des revendications précédentes, **caractérisée en ce que**, en amont du passage rotatif d'alimentation (26), est disposé un dispositif à soupape d'alimentation (25), par l'intermédiaire duquel le passage rotatif d'alimentation (26) peut être alimenté en air et purgé.

9. Installation de contrôle de la pression des pneus pour véhicule agricole (5) selon l'une des revendications précédentes, **caractérisée en ce que**, en amont du passage rotatif à pression de contrôle (31), est disposé un dispositif à soupape à pression de contrôle (30), par l'intermédiaire duquel le passage rotatif à pression de contrôle (31) peut être alimenté en air et purgé.

10. Installation de contrôle de la pression des pneus pour véhicule agricole (5) selon la revendication 8 et 9, **caractérisée en ce que** le dispositif à soupape à pression de contrôle (30) et le dispositif à soupape d'alimentation (25) sont disposés dans un module (46).

11. Installation de contrôle de la pression des pneus pour véhicule agricole (5) selon l'une des revendications précédentes, **caractérisée en ce que**
a) un capteur de pression (20) est présent, qui détecte un signal de mesure pour la pression dans le pneu (4) et
b) un dispositif de transmission sans fil (21) est présent, par l'intermédiaire duquel la transmission du signal de mesure à une unité de commande électronique (16) a lieu sans fil.

12. Tracteur agricole (2) ou remorque agricole (82) avec une installation de contrôle de la pression des pneus pour véhicule agricole (5) selon l'une des revendications précédentes.

13. Tracteur agricole (2) ou remorque agricole (82) selon la revendication 12, **caractérisé en ce que**
a) la voie à haute pression (11) bifurque vers plusieurs embranchements de voie à haute pression (13a, 13b...),
b) les embranchements de voie à haute pression (13a, 13b...) conduisent chacun à un pneu (4a, 4b...) et
c) dans chacun des embranchements de voie à haute pression (13a, 13b...), sont disposés un dispositif de contrôle de la pression du pneu (29a, 29b...) et un passage rotatif (45a, 45b...) fixés à la roue du véhicule (3a, 3b...).

14. Véhicule agricole avec un tracteur agricole (2) selon la revendication 12 ou 13 et remorque agricole (82) selon la revendication 12 ou 13, dans lequel
a) dans la remorque agricole (82), sont présents plusieurs embranchements de voie à haute pression (13a, 13b...),
b) les embranchements de voie à haute pression (13a, 13b...) conduisent chacun à un pneu (4a, 4b...) et
c) dans chacun des embranchements de voie à haute pression (13a, 13b...), sont disposés un dispositif de contrôle de la pression du pneu (29a, 29b...) et un passage rotatif (45a, 45b...) fixés à une roue du véhicule (3a, 3b...).
